# EUROPEAN PATENT APPLICATION

(11) **EP 1 271 435 A2**
(43) Date of publication of application: **02.01.2003**
(21) Application number: 02253485.3
(22) Date of filing: 17.05.2002
(51) Int. Cl.: G07F 19/00

(54) **Authentication and access control system**

(30) Priority: 15.06.2001 US 882978
(71) Applicant: Hewlett-Packard Company, Palo Alto, CA 94304 (US)
(72) Inventor: Villaret, Jean-Marc, Paris 75020 (FR); Taylor, Stuart, Cupertino, California 45014 (US); Ritschel, Kevin, San Jose, California 95127 (US)
(74) Representative: Jehan, Robert

(57) **Abstract**

A system and method provide authentication for electronic transactions. They involve inputting smart card information from a smart card (101) into a payment enabled device (1070 and inputting an identification number into the payment enabled device. The smart card information and the identification number are then authenticated (200). Payment information is then sent from a server to a desired location after authenticating the smart card information and identification number.

## Description

The present invention relates to authentication of electronic transactions, for example payment transactions which are authenticated by use of an EMV SmartCard. The disclosure in the present application is related to the disclosures in commonly assigned and co-pending US patent application no. 09/688,270, filed on 11 October 2000, entitled "PAYMENT ROAMING - PAYMENTS THROUGH VARIOUS NETWORK INSTITUTIONS WITHOUT REGARDS TO TIME OR LOCATIONS OF THE PAYMENT APPLIANCES", which claims priority from US provisional patent application no. 60/229,274, filed on 30 August 2000, entitled "PAYMENT ROAMING PROCESS".

Paying by a payment card (e.g., VISA, Mastercard, EMV, American Express, etc.) is very common, which usually requires a point-of-sale (POS) device, a card-issuing bank, an acquirer bank, and a merchant at bank. Swiping a payment card through a POS device initiates a payment transaction. The card-issuing bank issues the card to the customer, and each time the customer uses the card to make payments, the card-issuing bank pays for the customer by authorising the acquirer bank to transfer the payment amount from the card-issuing bank to the merchant bank. The card-issuing bank later bills the customer, usually once a month. Typically, the acquirer bank charges the merchant a certain fee for processing a payment transaction.

An alternative to using standard credit cards is to use a smart card, which is a plastic card that includes a computer chip embedded inside. An example of a smart card is an EMV card, which is the standard for Europe, and stands for Europay, Mastercard, VISA. These types of cards are designed to be used for physical payment, that is being swiped or scanned at a POS terminal. The chip includes identification and authentication information that is stored therein.

Mobile telephones have also been used in payment transactions. In one approach, a user uses a cellular telephone to dial a telephone number associated with a vending machine to send payment information to that machine and buy products and services from that machine. The user then receives the vending-machine-transaction bill through the bill for the cellular telephone service provider. These telephones may include a web identification module (WIM) which would be used to active remote payment. However, such payment may only be made through the existing telephone account.

Other methods of payments using cards include using a PC connecting to the Internet, using a set-top box provided by a service provider, and so on. Payment by credit cards over the Internet may not be safe. Presently, a customer may provide credit card information to a website to buy products/services. However, it is difficult for the customer to determine whether that website is from a real merchant or from a fraudulent merchant. Similarly, a merchant does not know for sure whether the customer is using their own card, or is using a stolen or fake card. Due to the high risk of fraud, a merchant has to pay high fees for the acquirer bank to process the payments. These high fees are in turn passed onto the consumer. A customer may include authentication keys and certificates in their PC for better secured communications over the Internet. However, this requires complicated and heavy loading of authentication software and logistic information into the customer's PC. Furthermore, the authentication software may be costly, and if the customer upgrades his disk-drive or his PC, then he must reload the software. The emerging trend is to get payment information including payment authentication keys and certificates from a payment wallet hosted on a web-based server or wallet. This requires that only the owner of the virtual wallet have access to that wallet.

The virtual wallet could comprise many different virtual credit cards, e.g. Visa, Mastercard, Shell gasoline card, etc. The virtual wallet is distinct from an EMV card in that the EMV card is a physical card, while the virtual wallet is stored on an electronic medium. The medium may be a computer, e.g., PC or Macintosh™. The medium may also be a remotely located server that is reachable via the Internet. This type of medium is known as a hosted wallet server. A hosted wallet has the payment capability, e.g., software, crypt-engine, etc., located at the server. The hosted wallet would allow a user to access their virtual wallet from any public computer, e.g., a computer kiosk, a cyber-café, a work/office computer, etc. The user accesses the hosted wallet via software interface known as a portal. Thus, a user may make both micro-payments and macro-payments from any Internet connected computer. Micro-payments are relatively small funds that are paid for one time purchases, e.g., food from a vending machine, a CD, a book etc. Macro-payments are relatively large funds that are paid for either one time purchases, e.g., a new car or appliance, or reoccurring purchases, e.g., monthly utility bills, monthly credit card bills, monthly mortgage bills, etc. For example, PALMX users can log on to palmx.net and disperse payment.

The virtual wallet has problems similar to that of the Internet, namely the problem of authentication. It is difficult for the wallet user to determine whether the website that payment is being sent to is that of a real merchant or a fraudulent merchant. Similarly, a website or merchant does not know for sure whether the wallet user is using their own wallet, or is using a stolen or fake card.

The present invention seeks to provide improved authentication of transactions.

According to an aspect of the present invention, there is provided a method of authenticating an electronic transaction as specified in claim 1.

The present invention is directed to a system and method which provide authentication for electronic transactions. The preferred embodiment involves inputting smart card information from a smart card into a payment enabled device and inputting an identification number into the payment enabled device. The smart card information and the identification number are then authenticated. Payment information is then sent from a server to a desired location after authenticating the smart card information and identification number.

According to another aspect of the present invention, there is provided a system for authenticating a transaction as specified in claim 8.

Embodiments of the present invention are described below, by way of example only, with reference to the accompanying drawings, in which:
FIGURE 1 depicts a preferred embodiment of the invention of the smart card being used to authenticate a transaction; and
FIGURE 2 depicts a preferred embodiment of the authentication of the smart card and the cardholder.

The described embodiment is directed to a system and method which provides authentication for hosted wallet transactions. This allows more secure payment when using the Internet, cellular phone, personal data assistants (PDAs), a set-top box, kiosk, a vending machine, a POS device, or other public and/or private device, so long as the device allows access to the user's portal for payment from the hosted wallet. Thus, the system can provide security for world-wide payment capability, as well as virtual world-wide payment capability. This allows for payment to be made for any type of goods or services, e.g. consumer goods, food, travel expenses, meals, utility services, doctor visits, car payments, loan payments, etc.

The system preferably uses a smart card to provide the authentication, and more preferably the EMV SmartCard. Smart cards are designed to provide physical payment, i.e. a user or merchant swiping or scanning the smart card across a POS terminal, just like a debit card or a credit card. This allows a user to purchase goods or services like a debit or credit card but with more security. The security of the smart card is provided by four functionalities or capabilities of the smart card. The first capability is that the smart card can be fully authenticated by the POS terminal. The second capability is that the smart card can be validated off-line, meaning that the smart card can be validated by a user inputted personal identification number (PIN) code. The third capability is that since the smart card has intelligence via its embedded processor, the smart card has more functionality for risk management and therefore can take more control of the risk of the transaction. Thus, the issuing bank of the smart card can have more decision making power in allowing transactions. The fourth capability is that the smart card can electronically sign transactions and serve as proof of transactions. The preferred system makes use of the first two capabilities of the smart card.

The preferred system uses the capabilities of the smart card to provide authentication for hosted wallet transactions. A user would access their wallet and then provide their smart card for authentication. The first functionality of the smart card would establish the authenticity of the hosted wallet account. A valid smart card would indicate that the wallet account (as well as the account owner) associated with the smart card is also valid. The second functionality of the smart card would establish the authenticity of the user, as only the smart card owner (or authorised agent thereof) would know the PIN number. The authentication of the merchant may be done by the hosted wallet server. This server may compare merchant information against lists of known and accepted merchants, as well as lists of fraudulent merchants. The use of the smart card allows for the hosted wallet to be used for payment transaction in a secure and reliable manner. Note that with the preferred system payment is being provided by the hosted wallet server and not the smart card, thus the smart card is not being used for payment but rather for authentication of the user and the wallet account. In other words the smart card is being used to unlock payment from a payment server.

Thus the preferred system enables remote identification of a user or consumer by using the user's smart card, e.g. EMV card. This remote identification is preferably used by a consumer to access their wallet server or payment proxy server that contains their server-based wallet. This wallet contains payment information enabling payment transactions over the virtual world (wired or wireless Internet). The payment transaction is preferably made via the 3 Domain SET/SSL standard from Visa and Mastercard. Consequently, the preferred system uses the remote identification to activate a 3D transaction from the wallet server. The use of the smart card provides the wallet server proof that the remote user that is attempting to activate a payment engine is an authorised user.

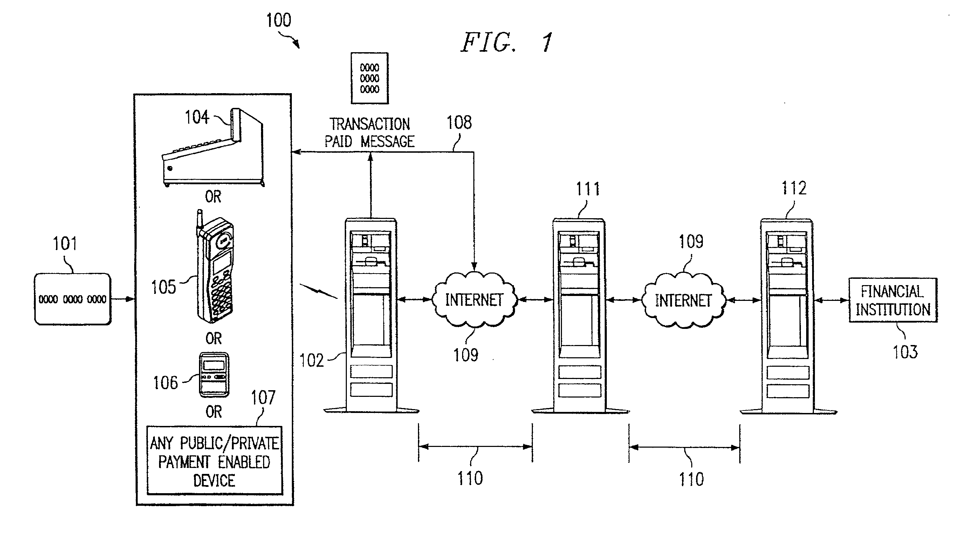

FIGURE 1 depicts a preferred embodiment of system 100 that uses a smart card 101, e.g. EMV SmartCard, to authenticate or identify the cardholder to the server based wallet or hosted wallet 102. After a user or consumer has decided to make a purchase of goods or a service, the user or merchant sends a payment request to the server that hosts the user's wallet. The payment request preferably contains information regarding the user and the merchant, e.g. user identification number and/or merchant identification number, along with a payment amount. The payment request also preferably includes type of payment information, e.g. credit account, debit account, pre-paid account, loyalty point account (e.g. frequent flyer miles). Other information such as a description of goods or services being purchased may also be included.

The request may originate from a retail point of sale (POS) terminal 104 which is typically located at a merchant's store. The request may also originate from a smart phone 105 that belongs to the consumer or the merchant. The request may also originate from a set-top box 106, which is a scaled down computer, that allows user to access the Internet from a television. The request may also originate from any public or private payment enabled device 107. Public devices may be attended by staff or unattended, but are devices that are accessible by the general public. For example, attended public devices may include kiosks, POS terminals, computers, and/or similar devices, while unattended public devices may include kiosks, vending machines, parking meters, newspaper machines, and/or similar devices. Private devices are those that belong to the consumer/user and may include personal data assistants (PDAs), computers, set-top devices, telephones, cell phones, and/or similar devices. Note that devices such as PDAs, and smart phones can send the request from any location, e.g., using wireless (cellular or satellite) communications, and thus do not have to be a particular location to send payment requests.

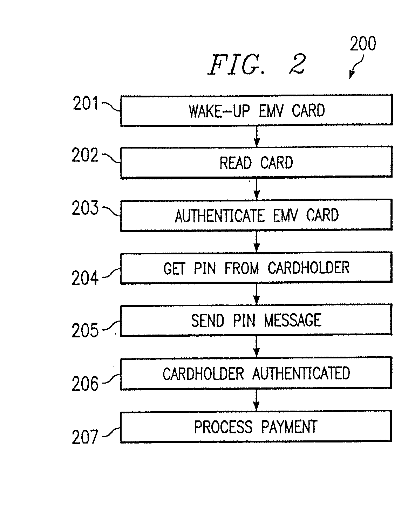

Prior to completion of the request by the hosted wallet server 102, the user and the smart card are preferably authenticated. An example of a preferred embodiment 200 of authentication is depicted in FIGURE 2. The smart card is inserted into the card reader of the request device 104, 105, 106 or 107, which wakes up the smart card 201. The smart cart is preferably then read 202 and authenticated 203 by the request device 104, 105, 106 or 107. Alternatively, the smart card may send an authentication message to the wallet server, and the wallet then authenticates 203 the smart card, as a 'real' smart card based on the message. The device 104-107 requests the PIN from the user 204. The pin is then preferably sent to the smart card 205, which verifies the PIN and authenticates the cardholder (or user or consumer) 206 as an authorised user of the smart card. The smart card 101 then forms a unique cryptogram, which is sent by device 104-107 to the wallet server 102 for verification. Alternatively, the wallet then requests the personal identification number (PIN) from the user 204. In this case, the PIN message may be sent 205 to the wallet for authentication 206. At this point, both the smart card and the user have been authenticated and/or verified by the wallet server 102.

The wallet then proceeds with the processing of the request 207. Note that authentication 200 may occur prior to the delivery of the request to the wallet, e.g., authentication is performed before the request is sent. Also, the authentication may occur concurrently with the delivery of the request information to the wallet, e.g., the request includes the authentication information. Furthermore, the authentication may occur after the request information has been delivered to the wallet, e.g., authentication occurs after the request has been sent, but before completion of the processing.

After authentication, the wallet on the wallet server 102 processes the transaction. Such processing is more fully explained in the co-pending US patent application no. 09/688,270, filed on 11 October 2000, entitled "PAYMENT ROAMING - PAYMENTS THROUGH VARIOUS NETWORK INSTITUTIONS WITHOUT REGARDS TO TIME OR LOCATIONS OF THE PAYMENT APPLIANCES", which is hereby incorporated herein by reference in its entirety. The remainder of FIGURE 1 depicts a preferred embodiment for such processing. The wallet server 102 sends at least a portion of the request to the merchant's website (or server), e.g., merchant.com 111, via the Internet 109. Encryption 110, e.g., Secure Electronic Transaction (SET) protocols, provides a secure link between the wallet server 102 and the merchant server 111. The merchant server then generates a payment request based on the product or service request from the wallet server. The payment request is passed to the acquirer's gateway 112, via the Internet 109, and secured by encryption 110. The acquirer's gateway 112 is the server of the bank selected by the merchant to manage payment requests. The acquirer's gateway 112 then contacts the appropriate financial institution 103, e.g., VISA or MASTERCARD or the like, of the user or cardholder. Transactions between gateway 112 and institution 103 may be delivered by a dedicated line, Internet or Intranet. The merchant server may issue a transaction paid message 108 or digital receipt to the user device 104-107 via the Internet 109. The merchant server may also issue a transaction paid message or digital receipt to the user's wallet in wallet server 102. Such receipts may be used as proof of purchase, for payment history, and/or for account reconciliation.

Note that some transactions may begin at the merchant server. For example, a person may be surfing the Internet, and purchase something from the merchant.com site. In such cases the authentication will occur through the merchant.com site to the hosted wallet.

Further note that the various hand-shaking messaging and verification messaging that would occur between the wallet server, the merchant server, the acquirer's gateway and the financial institution is not shown for the sake of simplicity.

When implemented in software, the elements of the preferred system are essentially the code segments to perform the necessary tasks. The program or code segments can be stored in a processor readable medium or transmitted by a computer data signal embodied in a carrier wave, or a signal modulated by a carrier, over a transmission medium. The "processor readable medium" may include any medium that can store or transfer information. Examples of the processor readable medium include an electronic circuit, a semiconductor memory device, a ROM, a flash memory, an erasable ROM (EROM), a floppy diskette, a compact disk CD-ROM, an optical disk, a hard disk, a fibre optic medium, a radio frequency (RF) link, etc. The computer data signal may include any signal that can propagate over a transmission medium such as electronic network channels, optical fibres, air, electromagnetic, RF links, etc. The code segments may be downloaded via computer networks such as the Internet, Intranet, etc.

The disclosures in United States patent application no. 09/882,978, from which this application claims priority, and in the abstract accompanying this application are incorporated herein by reference.

## Claims

1. A method of authenticating an electronic transaction including the steps of:
inputting smart card information from a smart card (101) into a payment enabled device (107);
inputting an identification number into the payment enabled device;
authenticating (203) the smart card information;
authenticating (206) the identification number; and
sending payment information from a server (1120 to a desired location after authenticating the smart card information and authenticating the identification number.

2. A method as in claim 1, wherein the payment enabled device is a private payment enabled device or a public payment enabled device.

3. A method as in claim 1, wherein the payment enabled device (107) is a kiosk, a point of sale terminal, a computer, a vending machine, a parking meter, a newspaper machine, a personal data assistant, a set-top box, a telephone or a cell phone.

4. A method as in any preceding claim, wherein the step of authenticating the smart card information (203) is performed by the payment enabled device (107) or by the server (112).

5. A method as in any preceding claim, wherein the step of authenticating the identification number (206) is performed by the smart card (101).

6. A method as in any preceding claim, wherein the electronic transaction is payment for at least one of a good and a service provided by a merchant.

7. A method as in claim 6, wherein the desired location is:
the merchant;
a merchant server that is used by the merchant; or
a financial institution that is used by the merchant.

8. A system for authenticating a transaction including means (104-106) for inputting smart card information from a smart card (101); means for inputting an identification number into a payment enabled device (107); means for authenticating the smart card information; means for authenticating the identification number; and means for sending payment information from a remote server (112) to a desired location after authenticating the smart card information and authenticating the identification number.

9. A system as in claim 8, wherein the payment enabled device is a private payment enabled device or a public payment enabled device.

10. A system as in claim 8, wherein the payment enabled device (107) is a kiosk, a point of sale terminal, a computer, a vending machine, a parking meter, a newspaper machine, a personal data assistant, a set-top box, a telephone or a cell phone.
